# FASCICULE DE BREVET EUROPEEN

(11) **EP 4 480 891 B1**
(45) Date de publication et mention de la délivrance du brevet: **05.11.2025**
(21) Numéro de dépôt: 24180788.2
(22) Date de dépôt: 07.06.2024
(51) Int. Cl.: B66F 9/18, A01D 87/00, A01D 87/12, E02F 3/96

(54) **ACCESSOIRE POUR CHARIOT ÉLÉVATEUR**
ZUBEHÖR FÜR GABELSTAPLER
ATTACHMENT FOR A LIFT TRUCK

(30) Priorité: 22.06.2023 FR 2306449
(43) Date de publication de la demande: 25.12.2024
(73) Titulaire: NJO, 49310 Lys-Haut-Layon (FR)
(72) Inventeur: OUDHOF, Nicolaas, 49350 Gennes Val de Loire (FR)
(74) Mandataire: Lequien, Philippe

(56) Documents cités:
- US-A- 4 402 644
- US-A- 5 603 597
- US-A1- 2002 110 446
- US-A1- 2016 198 633
- US-B2- 8 740 540

## Description

Le domaine de l'invention est celui de la conception et de la fabrication d'accessoires de chariots élévateurs.

L'invention concerne plus particulièrement un accessoire permettant d'utiliser un chariot élévateur pour manutentionner des balles de paille. Un tel accessoire est connu du document US 8 740 540 B2.

Une balle de paille, également appelée ballot de paille, correspond à un volume important de paille conditionné compressé et ficelé, sous forme de cylindre ou de parallélépipède rectangle.

Classiquement, les balles de paille sont manipulées par des tracteurs qui peuvent avantageusement être pourvus d'un outil présentant des pics-bottes de balles de paille.

Ces balles de paille sont utilisées dans le cadre de la réalisation d'isolation thermique par la paille. À cet effet, les balles de paille sont défaites, et la paille est de nouveau collectée, compressée, et ficelée, mais cette fois sous une forme plus adaptée à la réalisation d'une isolation thermique par la paille, c'est-à-dire sous forme de blocs de paille de forme parallélépipédique rectangle de plus petite dimension.

Pour renforcer la pertinence de la paille comme solution d'isolation thermique, il est nécessaire de pouvoir conditionner les blocs de paille sur des palettes pour permettre leur convoyage par camions afin de diminuer le coût global de mise en oeuvre d'une isolation thermique par la paille.

Ceci implique l'usage de transpalettes ou de chariots élévateurs pour manipuler les palettes de blocs de paille.

Par raison écologique, il est recherché à approvisionner les menuisiers professionnels et/ou les chantiers en blocs de paille issus de productions fourragères locales.

De ce fait, les lieux de transformation des balles de paille en blocs de paille tendent à être installés dans des petites structures, et des solutions peu onéreuses, robustes, et tendant à limiter les coûts globaux d'exploitation, sont recherchées.

Il résulte de ce qui précède qu'un lieu de transformation de balles de paille en blocs de paille nécessite différents engins pour manipuler la paille, ce qui n'est pas souhaitable.

L'invention a notamment pour objectif de pallier à ces inconvénients de l'art antérieur.

Plus précisément, l'invention a pour objectif de proposer une solution visant à rationaliser l'usage des engins permettant de manipuler la paille destinée à être transformée pour réaliser une isolation thermique, et la paille transformée.

L'invention a également pour objectif de fournir une telle solution qui soit robuste et économique.

Ces objectifs, ainsi que d'autres qui apparaîtront par la suite, sont atteints grâce à l'invention qui a pour objet un accessoire pour chariot élévateur équipé d'une fourche de levage de palettes comprenant un tablier et deux bras s'étendant depuis le tablier,
caractérisé en ce que l'accessoire comprend :
- un bâti comprenant au moins un profilé d'emmanchement sur un bras d'une fourche de levage ;
- des moyens de verrouillage du bâti sur le tablier de la fourche de levage dans une position emmanchée du ou des bras dans le ou les profilés d'emmanchement ;
- au moins deux pics-bottes pour balles de paille, chaque pic-bottes s'étendant du bâti parallèlement au profilé d'emmanchement.

Grâce à l'accessoire selon l'invention, il est possible d'équiper un chariot élévateur de manière rapide pour qu'il puisse manipuler des balles de paille.

De base, un chariot élévateur ne peut pas, ou très difficilement, manipuler des balles de paille du fait que sa fourche de levage, adaptée aux palettes, ne peut pas piquer une balle de paille.

En effet, la forme et la section des bras d'une fourche de levage de palettes sont telles que même en appliquant une force très importante à l'aide d'un chariot élévateur il n'est pas possible, ou à tout le moins très difficilement possible, de faire pénétrer à l'intérieur de la balle de paille lesdits bras pour la manutentionner.

Les pics-bottes pour balles de paille présentés par l'accessoire permettent alors au chariot élévateur de manipuler de manière aisée une balle de paille.

Cet accessoire forme de plus une solution particulièrement robuste et peu onéreuse.

L'accessoire selon l'invention permet ainsi d'utiliser un unique chariot élévateur pour manipuler soit des balles de paille à l'aide de l'accessoire, soit des palettes de blocs de paille en retirant rapidement l'accessoire du chariot élévateur.

Préférentiellement, le bâti comprend un profilé d'emmanchement pour chaque bras de la fourche de levage.

Le couplage de l'accessoire sur la fourche d'un chariot élévateur est alors plus robuste.

Selon une caractéristique préférée, les moyens de verrouillage prennent la forme d'une butée arrière montée mobile sur le bâti et susceptible d'adopter une position de blocage contre le tablier dans laquelle elle limite un déplacement relatif du bâti par rapport au tablier selon une direction d'extraction du ou des bras de la fourche de levage du ou des profilés d'emmanchement, dans la position emmanchée du ou des bras dans le ou les profilés d'emmanchement.

De tels moyens de verrouillage sont simples et robustes.

En effet, pour installer l'accessoire il suffit de mettre la butée arrière dans une position où elle n'empêche pas l'installation de l'accessoire sur la fourche, puis d'insérer le ou les bras dans le ou les profilés d'emmanchement, puis de mettre en place la butée arrière pour éviter tout désengagement de l'accessoire des bras de la fourche de levage.

Avantageusement, l'insertion du ou des bras dans le ou les profilés d'emmanchement, est réalisée en déplaçant le chariot élévateur pour éviter d'avoir à porter l'accessoire.

Préférentiellement, la butée arrière est portée par un levier monté librement mobile en rotation sur le bâti.

Dans ce cas, le seul poids du levier sert à maintenir la butée en arrière dans sa position de blocage. Cette solution permet de limiter les composants de l'accessoire, renforçant de ce fait sa robustesse.

Avantageusement, le bâti comprend au moins une butée avant destinée à venir en appui sur le tablier pour limiter un déplacement relatif du bâti par rapport au tablier selon une direction d'insertion du ou des bras de la fourche de levage dans le ou les profilés d'emmanchement, dans la position emmanchée du ou des bras dans le ou les profilés d'emmanchement.

Selon une première variante, les pics-bottes s'étendent en porte-à faux du bâti.

Cette variante est particulièrement avantageuse en ce qu'elle permet de charger ou de décharger aisément un camion de transport de balles de paille à l'aide d'un chariot élévateur équipé de l'accessoire selon l'invention.

En effet, grâce aux pics-bottes qui s'étendent en porte-à-faux, un chariot élévateur peut saisir ou déposer une balle de paille d'un premier côté latéral d'une remorque d'un camion, tout en étant positionné sur le sol bordant l'autre côté latéral de la remorque du camion.

En d'autres termes, dans le cas où une remorque de camion est ouverte sur l'un de ses côtés latéraux, le chariot élévateur avec ses pics-bottes en porte-à-faux peut venir charger ou décharger les balles de paille depuis ce seul côté latéral ouvert de la remorque, et ce même si certaines de ces balles de paille sont rangées, ou à ranger, à proximité du côté latéral opposée de la remorque.

Il a été constaté que même avec un tel porte-à-faux, une balle de paille peut quand même être manipulée à l'aide du chariot élévateur, sans risquer un basculement du chariot élévateur.

Selon une seconde variante, les pics-bottes s'étendent en surplombant le bâti.

Dans ce cas, il est possible de manipuler des balles de paille en venant piquer la balle de paille à l'aide des pics-bottes, tout en positionnant les bras de la fourche de levage, et le bâti de l'accessoire, en dessous de la balle de paille.

L'invention a également pour objet un système de manutention de balles de paille et de palettes de blocs de paille, comprenant un chariot élévateur équipé d'une fourche de levage de palettes comprenant un tablier et deux bras de s'étendant depuis le tablier,
caractérisé en ce qu'il comprend un accessoire tel que défini précédemment.

Ce système présente les mêmes avantages précédemment décrits en rapport avec l'accessoire.

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique en perspective avant d'un accessoire selon l'invention monté sur une fourche de levage de palettes d'un chariot élévateur ;
- la figure 2 est une représentation schématique en perspective arrière de l'accessoire selon l'invention ;
- la figure 3 est une représentation schématique en perspective avant d'une fourche de levage de palettes d'un chariot élévateur.

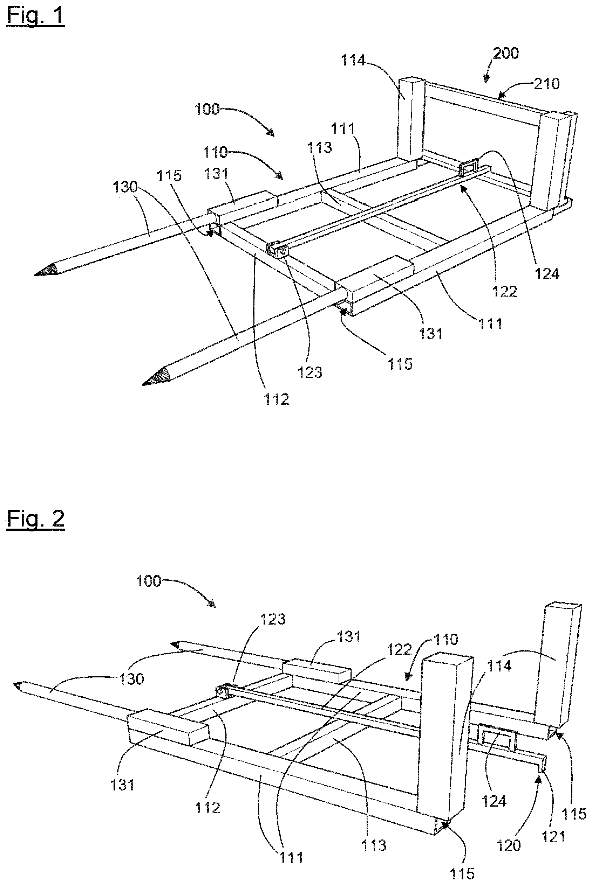

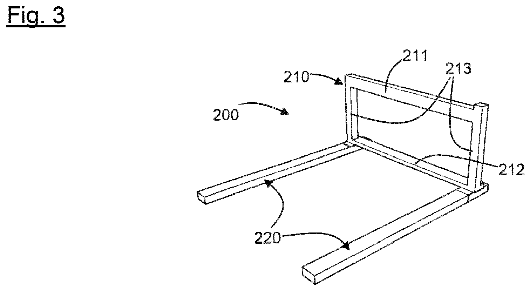

En référence aux figures 1 et 3, un accessoire 100 pour chariot élévateur (non illustré) est représenté. Le chariot élévateur est un chariot élévateur de palettes, et à cet effet est équipé d'une fourche 200 de levage de palettes.

En référence à la figure 3, la fourche 200 de levage de palettes comprend un tablier 210 et deux bras 220 s'étendant depuis le tablier 210.

Selon le présent mode de réalisation, le tablier 210 comprend une barre supérieure 211, une barre inférieure 212, et deux montants 213.

La barre inférieur 212 présente une section rectangulaire.

La barre supérieure 211 présente également une section rectangulaire.

Les montants 213 s'étendent entre la barre supérieur 211 et la barre inférieure pour les coupler.

Bien que cela ne soit pas représenté, le tablier 210 comprend des moyens de couplage à un chariot élévateur, permettant au chariot élévateur de déplacer la fourche 200 de levage.

Les deux bras 220 présente chacun une section rectangulaire. Ces deux bras 220 s'étendent orthogonalement ou sensiblement orthogonalement à un plan dans lequel s'inscrit le tablier 210.

Ces deux bras 220, de conception classique et bien connue, sont conçus pour s'insérer à l'intérieur des espaces vides d'une palette pour pouvoir la soulever.

En référence aux figures 1 et 2, l'accessoire 100 est à présent décrit.

Cet accessoire 100 fait partie d'un système de manutention de balles de paille et de palettes de blocs de paille.

Par balle de paille il est entendu, une masse de paille comprimée sous forme parallélépipédique rectangle (pouvant présenter les dimensions suivantes : 0,9m x 1,2m x 2,4m) ou cylindrique (pouvant présenter les dimensions suivantes : hauteur de 120 cm, et diamètre de 160 à 180 cm), avec un poids de l'ordre de 300 à 500 kg.

Par l'expression bloc de paille, il est entendu une masse de paille comprimée sous forme parallélépipédique rectangle, pouvant présenter une largeur de l'ordre de 37 cm, une hauteur de l'ordre de 47 cm, et une longueur pouvant être réglée, par exemple à 55 cm, 100cm, ou encore 120 cm.

Le système de manutention comprend ainsi un chariot élévateur équipé d'une fourche 200 de levage de palettes, telle que précédemment décrite. Le chariot élévateur équipé de sa fourche 200 de levage de palettes est à même de manipuler des palettes de blocs de paille.

Tel que cela apparaît par la suite, le chariot élévateur équipé de sa fourche 200 de levage de palettes, sur laquelle est installé l'accessoire 100, permet de manipuler des balles de paille.

L'accessoire 100 comprend :
- un bâti 110 ;
- des moyens de verrouillage 120 du bâti 110 sur le tablier 210 de la fourche 200 de levage ;
- au moins deux pics-bottes 130 pour balles de paille.

Le bâti 110 comprend deux profilés 111 d'emmanchement sur un bras 220 d'une fourche de 100 de levage. Plus précisément, le bâti 110 comprend un profilé 111 d'emmanchement pour chaque bras 220 de la fourche 200 de levage.

Selon un mode de réalisation envisageable, le bâti 110 pourrait ne comprendre qu'un seul profilé 111 d'emmanchement.

Chaque profilé 111 d'emmanchement délimite un logement 115 longitudinal de réception d'un bras 220 de la fourche 200 de levage.

Ce logement 115 longitudinal de réception est ouvert au moins à l'extrémité du profilé 111 d'emmanchement au travers de laquelle le bras 220 doit être inséré.

Selon le présent mode de réalisation, le logement 115 longitudinal de réception est ouvert aux deux extrémités du profilé 111 d'emmanchement.

Chaque profilé 111 d'emmanchement présente une section rectangulaire.

Les dimensions internes du profilé 111 d'emmanchement sont conçues pour correspondre aux dimensions externes du bras 220, au jeu près, et pour permettre ainsi l'insertion d'un bras 220 dans le logement 115 longitudinal de réception.

Le bâti 110 comprend également une première traverse 112, et une seconde traverse 113.

La première traverse 112 et la seconde traverse 113 couplent l'un à l'autre les deux profilés 111 d'emmanchement.

Selon un autre mode de réalisation, le bâti 110 pourrait intégrer, soit en complément de l'une de la première traverse 112 et de la seconde traverse 113 soit en complément des deux traverses, ou encore soit en alternative aux traverses, un panneau sur lequel serait couplé les deux profilés 111 d'emmanchement.

La première traverse 112 est couplée aux extrémités des profilés 111 d'emmanchement qui sont opposées aux extrémités destinées à être en contact, ou le plus rapproché du tablier 210.

Tel que cela est illustré sur les figures 1 et 2, et selon le présent mode de réalisation, le bâti 110 comprend deux butées avant 114.

Selon d'autres modes de réalisation, le bâti 110 peut comprendre une seule butée avant 114, ou plus de deux butées avant 114.

Ces butées avant 114 sont conçues pour venir en appui sur le tablier 210 pour limiter un déplacement relatif du bâti 110 par rapport au tablier 210 selon une direction d'insertion des bras 220 de la fourche 200 de levage dans les profilés 111 d'emmanchement, lors de l'insertion des bras 220 dans les profilés d'emmanchement.

En d'autres termes, ces butées avant 114 viennent en appui sur le tablier 210 suite à l'installation de l'accessoire 100 sur la fourche 200 de levage et à l'insertion totale des bras 220 dans les profilés 111 d'emmanchement.

Selon un autre mode de réalisation envisageable, les butées avant 114 pourraient être formées par les extrémités des profilés 111 d'emmanchement qui viendraient en contact partiel avec le tablier 210.

Tel qu'évoqué précédemment, l'accessoire 100 comprend des moyens de verrouillage 120 du bâti 110 sur le tablier 210 de la fourche 200 de levage. Ces moyens de verrouillage 120 permettent de verrouiller le bâti 110, et plus généralement l'accessoire 100, dans une position emmanchée des bras 220 dans les profilés 111 d'emmanchement.

Cette position emmanchée des bras 220 dans les profilés 111 d'emmanchement est illustrée par la figure 1.

Selon le présent mode de réalisation, les moyens de verrouillage 120 prennent la forme d'une butée arrière 121.

Cette butée arrière 121 est montée mobile sur le bâti 110.

En référence à la figure 1, la butée arrière 121 d'adopte une position de blocage contre le tablier 210.

Dans cette position de blocage, la butée arrière 121 limite un déplacement relatif du bâti 110 par rapport au tablier 210 selon une direction d'extraction des bras 220 de la fourche 200 de levage des profilés 111 d'emmanchement, dans une position emmanchée des bras 220 dans les profilés 111 d'emmanchement.

La butée arrière 121 est plus précisément portée par un levier 122 monté librement mobile en rotation sur le bâti 110.

En référence à la figure 1, ce levier 122 adopte une position de verrouillage pour verrouiller le bâti 110 dans une position emmanchée des bras 220 dans les profilés 111 d'emmanchement. Dans cette position de verrouillage du levier 122, la butée arrière 121 adopte sa position de blocage.

A cet effet, le bâti 110 comprend un support 123 portant un axe autour duquel est monté à rotation le levier 122. Ce support 123 est solidaire du bâti 110, et plus précisément de la première traverse 112.

Concrètement, le levier 122 correspond à un profilé métallique, par exemple en acier, sur lequel est rapportée par soudage une pièce métallique, tel qu'un autre profilé métallique, pour former la butée arrière 121.

Le levier 122 est pourvu d'une poignée 124 facilitant sa manipulation.

L'accessoire 100 est conçu de manière à ce que le levier 122 tendent à maintenir sa position de verrouillage par la seule action de la gravité.

En effet, dans le cas où l'accessoire 100 est positionné de manière à ce que les profilés 111 d'emmanchement s'étendent horizontalement, alors le levier 122 est mobile dans un plan vertical, et sa position de verrouillage le fait reposer sur la barre inférieure 212 du tablier 210, avec la butée arrière 121 positionnée derrière la barre inférieure 212 par rapport à l'accessoire 100.

Bien que cela ne soit pas représenté, l'accessoire 100 comprend des moyens de retenue dans une position désengagée de la butée arrière 121.

Ces moyens de retenue prennent par exemple la forme d'un taquet conçu pour retenir le levier 122 dans une position haute, et nécessitant une manipulation d'un opérateur pour permettre de rabaisser le levier 122 vers la position de verrouillage.

Tel qu'évoqué précédemment, l'accessoire 100 présente des pics-bottes 130.

Les deux pics-bottes 130 présentent essentiellement une forme cylindrique se prolongeant par une pointe. La forme de ces pics-bottes 130 est bien connue et peut être retrouvée par exemple sur des accessoires spécialisés de tracteurs agricoles.

Chaque pic-bottes 130 s'étend du bâti 110 parallèlement aux profilés 111 d'emmanchement.

Les deux pics-bottes 130 sont couplés sur le bâti par l'intermédiaire de manchons 131.

Ces manchons 131 sont en l'occurrence couplés à une extrémité des profilés 111 d'emmanchement, sur une face supérieure de ces profilés 111 d'emmanchement.

Chaque pic-bottes 130 est par exemple inséré dans un manchon 131, puis au moins une vis est resserrée pour exercer une pression latéralement sur le pic-bottes 130 afin de le maintenir captif dans le manchon 131, et bloquer sa rotation autour de son axe afin de le faire travailler dans le sens pour lequel il a été conçu.

Il est également envisageable que les pics-bottes 130 soient soudés dans les manchons 131.

Selon le présent mode de réalisation, les pics-bottes 130 s'étendent en porte-à faux du bâti 110.

Les pics-bottes 130 s'étendent notamment en porte-à-faux des logements 115 longitudinaux de réception.

Plus précisément, et par exemple quand le bâti 110 repose sur une surface horizontale, alors les pics-bottes ne s'étendent pas en surplombant le bâti 110 ou les profilés 111 d'emmanchement, mais s'étendent, selon une projection verticale sur un plan horizontal, dans le prolongement du bâti 110.

Une balle de paille piquée à l'aide des pics-bottes 130 est alors séparée du tablier 210 par au moins la distance séparant les manchons 131 des butées avant 114.

Selon un autre mode de réalisation envisageable non représenté, les pics-bottes 130 s'étendent en surplombant le bâti 110. Dans ce cas, un volume libre, et ouverte vers l'avant de l'accessoire 100, est ménagé entre les pics-bottes et les profilés 111 d'emmanchement. Ceci permet à une balle de paille d'être piquée par les pics-bottes 130 en faisant passer les profilés 111 d'emmanchement sous la balle de paille. Dans ce mode de réalisation, les moyens de verrouillage 120 doivent être déportés en côté du bâti pour les maintenir accessibles un fois une balle de paille chargée sur l'accessoire.

L'installation et la désinstallation de l'accessoire 100 évoquée ci-dessus est à présent détaillé en référence aux figures 1 et 2.

L'accessoire 100, préalablement à son installation, peut reposer sur un sol par l'intermédiaire de son bâti 110.

Le levier 122 peut être relevé à l'aide de la poignée 124 de manière à ce qu'il n'empêche pas l'installation de l'accessoire 100 sur la fourche de 100 de levage. Les moyens de retenue permettent de maintenir le levier dans une position haute

Un chariot élévateur muni d'une fourche 200 de levage est alors conduit de manière à positionner les bras 220 de la fourche de levage dans le prolongement des profilés 111 d'emmanchement, en face des logements 115 longitudinaux de réception, à l'opposé des pics-bottes 130.

L'opérateur du chariot élévateur peut alors faire avancer ledit chariot élévateur de manière à insérer les bras 200 à l'intérieur des profilés 111 d'emmanchement jusqu'à ce que le tablier 210 arrive en butée contre les butées avant 114.

Il suffit alors à l'opérateur du chariot élévateur de libérer le levier 122 des moyens de retenue, et de faire basculer le levier 122 de manière à ce que la butée arrière 121 vienne se positionner derrière la barre inférieure 212.

L'accessoire 100 est alors installé et l'opérateur du chariot élévateur peut ainsi aller manipuler des balles de paille.

Pour désinstaller l'accessoire 100, l'opérateur doit faire reposer l'accessoire 100 sur le sol, déverrouiller les moyens de verrouillage 120 et les maintenir dans une position désengagée à l'aide des moyens de retenue, puis faire reculer son chariot élévateur pour désengager les bras 220 des profilés 111 d'emmanchement.

Le chariot élévateur est ainsi libéré de l'accessoire 100, et l'opérateur peut alors manipuler des palettes de bloc de paille à l'aide de la fourche de levage et de ses bras 220.

L'accessoire 100 selon l'invention précédemment décrit forme une solution permettant de rationaliser l'usage d'un chariot élévateur, pour manipuler de manière optimale des balles de paille ou des blocs de paille palettisés, et forme une solution particulièrement robuste et économique.

## Revendications

1. Accessoire (100) pour chariot élévateur équipé d'une fourche (200) de levage de palettes comprenant un tablier (210) et deux bras (220) s'étendant depuis le tablier (210),
où l'accessoire (100) comprend :
- un bâti (110) comprenant au moins un profilé (111) d'emmanchement sur un bras (220) d'une fourche (200) de levage ;
et **caractérisé en ce que** l'accessoire (100) comprend en outre:
- des moyens de verrouillage (120) du bâti (110) sur le tablier (210) de la fourche (200) de levage dans une position emmanchée du ou des bras (220) dans le ou les profilés (111) d'emmanchement ;
- au moins deux pics-bottes (130) pour balle de paille, chaque pic-bottes (130) s'étendant du bâti (110) parallèlement au profilé (111) d'emmanchement.

2. Accessoire (100) selon la revendication précédente, **caractérisé en ce que** le bâti (110) comprend un profilé (111) d'emmanchement pour chaque bras (220) de la fourche (200) de levage.

3. Accessoire (100) selon l'une quelconque des revendications précédentes, **caractérisé en ce que** les moyens de verrouillage (120) prennent la forme d'une butée arrière (121) montée mobile sur le bâti (110) et susceptible d'adopter une position de blocage contre le tablier (210) dans laquelle elle limite un déplacement relatif du bâti (110) par rapport au tablier (210) selon une direction d'extraction du ou des bras (220) de la fourche (200) de levage du ou des profilés (111) d'emmanchement, dans la position emmanchée du ou des bras (220) dans le ou les profilés (111) d'emmanchement.

4. Accessoire (100) selon la revendication précédente, **caractérisé en ce que** la butée arrière (121) est portée par un levier (122) monté librement mobile en rotation sur le bâti (110).

5. Accessoire (100) selon l'une quelconque des revendications précédentes, **caractérisé en ce que** le bâti (110) comprend au moins une butée avant (114) destinée à venir en appui sur le tablier (210) pour limiter un déplacement relatif du bâti (110) par rapport au tablier (210) selon une direction d'insertion du ou des bras (220) de la fourche (200) de levage dans le ou les profilés (111) d'emmanchement, dans la position emmanchée du ou des bras (220) dans le ou les profilés (111) d'emmanchement.

6. Accessoire (100) selon l'une quelconque des revendications précédentes, **caractérisé en ce que** les pics-bottes (130) s'étendent en porte-à faux du bâti (110).

7. Accessoire (100) selon l'une quelconque des revendications 1 à 5, **caractérisé en ce que** les pics-bottes (130) s'étendent en surplombant le bâti (110).

8. Système de manutention de balles de paille et de palettes de blocs de paille, comprenant un chariot élévateur équipé d'une fourche (200) de levage de palettes comprenant un tablier (210) et deux bras (220) de s'étendant depuis le tablier (210),
**caractérisé en ce qu'**il comprend un accessoire (100) selon l'une quelconque des revendications précédentes.

## Patentansprüche

1. Zubehörteil (100) für einen Gabelstapler, der mit einer Palettenhubgabel (200) ausgestattet ist, die einen Gabelträger (210) und zwei Arme (220) umfasst, die sich von dem Gabelträger (210) aus erstrecken, wobei das Zubehörteil (100) Folgendes umfasst:
- ein Gestell (110), das mindestens ein Profil (111) zum Aufstecken auf einen Arm (220) einer Hubgabel (200) umfasst;
und **dadurch gekennzeichnet, dass** das Zubehörteil (100) ferner Folgendes umfasst:
- Mittel zum Verriegeln (120) des Gestells (110) an dem Gabelträger (210) der Hubgabel (200) in einer aufgesteckten Position des oder der Arme (220) in das oder die Aufsteckprofile (111);
- mindestens zwei Ballenspießer (130) für Strohballen, wobei sich jeder Ballenspießer (130) von dem Gestell (110) parallel zum Aufsteckprofil (111) erstreckt.

2. Zubehörteil (100) nach dem vorhergehenden Anspruch, **dadurch gekennzeichnet, dass** das Gestell (110) ein Aufsteckprofil (111) für jeden Arm (220) der Hubgabel (200) umfasst.

3. Zubehörteil (100) nach einem der vorhergehenden Ansprüche, **dadurch gekennzeichnet, dass** die Verriegelungsmittel (120) die Form eines hinteren Anschlags (121) haben, der beweglich am Gestell (110) montiert ist und eine Verriegelungsposition gegenüber dem Gabelträger (210) einnehmen kann, in der er eine relative Bewegung des Gestells (110) gegenüber dem Gabelträger (210) in einer Auszugsrichtung des oder der Arme (220) der Gabel (200) zum Anheben des oder der Aufsteckprofile (111) in der aufgesteckten Position des oder der Arme (220) in das oder die Aufsteckprofile (111) begrenzt.

4. Zubehörteil (100) nach dem vorhergehenden Anspruch, **dadurch gekennzeichnet, dass** der hintere Anschlag (121) von einem frei drehbar am Gestell (110) montierten Hebel (122) getragen wird.

5. Zubehörteil (100) nach einem der vorhergehenden Ansprüche, **dadurch gekennzeichnet, dass** das Gestell (110) mindestens einen vorderen Anschlag (114) umfasst, der dazu bestimmt ist, auf dem Gabelträger (210) aufzuliegen, um eine relative Bewegung des Gestells (110) in Bezug auf den Gabelträger (210) in einer Einführrichtung des oder der Arme (220) der Hubgabel (200) in das oder die Aufsteckprofile (111) in der aufgesteckten Position des oder der Arme (220) in das oder die Aufsteckprofile (111) zu begrenzen.

6. Zubehörteil (100) nach einem der vorhergehenden Ansprüche, **dadurch gekennzeichnet, dass** sich die Ballenspießer (130) freitragend von dem Gestell (110) erstrecken.

7. Zubehörteil (100) nach einem der Ansprüche 1 bis 5, **dadurch gekennzeichnet, dass** sich die Ballenspießer (130) über das Gestell (110) hinaus erstrecken.

8. System zur Handhabung von Strohballen und Strohblockpaletten, umfassend einen Gabelstapler, der mit einer Palettenhubgabel (200) ausgestattet ist, die einen Gabelträger (210) und zwei Arme (220) umfasst, die sich von dem Gabelträger (210) aus erstrecken,
**dadurch gekennzeichnet, dass** es ein Zubehörteil (100) nach einem der vorhergehenden Ansprüche umfasst.

## Claims

1. An accessory (100) for a forklift equipped with a pallet lifting fork (200) comprising a carriage (210) and two arms (220) extending from the carriage (210), wherein the accessory (100) comprises:
- a frame (110) comprising at least one profile (111) for press fitting onto an arm (220) of a lifting fork (200);
and **characterised in that** the accessory (100) further comprises:
- means for locking (120) the frame (110) to the carriage (210) of the lifting fork (200) in a press fitted position of the arm(s) (220) into the press fit profile(s) (111);
- at least two bales forks (130) for straw bales, each bales fork (130) extending from the frame (110) in parallel to the press fit profile (111).

2. The accessory (100) according to the preceding claim, **characterised in that** the frame (110) comprises a press fit profile (111) for each arm (220) of the lifting fork (200) .

3. The accessory (100) according to any one of the preceding claims, **characterised in that** the locking means (120) take the form of a rear abutment (121) movably mounted to the frame (110) and likely to assume a locking position against the carriage (210) in which it limits a relative displacement of the frame (110) relative to the carriage (210) along a direction of extraction of the arm(s) (220) of the lifting fork (200) from the press fit profile(s) (111), in the press fitted position of the arm(s) (220) into the press fit profile(s) (111).

4. The accessory (100) according to the preceding claim, **characterised in that** the rear abutment (121) is carried by a lever (122) freely rotatably mounted to the frame (110) .

5. The accessory (100) according to any one of the preceding claims, **characterised in that** the frame (110) comprises at least one front abutment (114) intended to bear against the carriage (210) to limit a relative displacement of the frame (110) relative to the carriage (210) along a direction of insertion of the arm(s) (220) of the lifting fork (200) into the press fit profile(s) (111), in the press fitted position of the arm (s) (220) into the press fit profile(s) (111).

6. The accessory (100) according to any one of the preceding claims, **characterised in that** the bales fork (130) extend overhanging the frame (110).

7. The accessory (100) according to any one of claims 1 to 5, **characterised in that** the bales fork (130) extend vertically above the frame (110).

8. A straw bale and straw block pallet handling system, comprising a forklift equipped with a pallet lifting fork (200) comprising a carriage (210) and two arms (220) extending from the carriage (210),
**characterised in that** it comprises an accessory (100) according to any one of the preceding claims.
